# FASCICULE DE BREVET EUROPEEN

(11) **EP 3 807 152 B1**
(45) Date de publication et mention de la délivrance du brevet: **23.02.2022**
(21) Numéro de dépôt: 19729296.4
(22) Date de dépôt: 12.06.2019
(51) Int. Cl.: B64G 1/64

(54) **ASSEMBLAGE DE VAISSEAUX SPATIAUX**
ANORDNUNG VON RAUMFAHRZEUGEN
SPACECRAFT ASSEMBLY

(30) Priorité: 14.06.2018 FR 1800608
(43) Date de publication de la demande: 21.04.2021
(73) Titulaire: THALES, 92400 Courbevoie (FR)
(72) Inventeur: TEXIER, Emmanuel, 06156 CANNES LA BOCCA Cedex (FR); DURAND, Yves, 06156 CANNES LA BOCCA Cedex (FR); ANDY, Jérôme, 06156 CANNES LA BOCCA Cedex (FR); RIBEYRON, Pascal, 06156 CANNES LA BOCCA Cedex (FR); LABARTHE, Julien, 06156 CANNES LA BOCCA Cedex (FR)
(74) Mandataire: Marks & Clerk France
(86) Numéro de dépôt international: PCT/EP2019/065295
(87) Numéro de publication internationale: WO 2019/238727

(56) Documents cités:
- WO-A1-2016/176298
- FR-A1- 2 717 770
- US-A- 5 411 226

## Description

L'invention relève du domaine de l'astronautique, et plus particulièrement du lancement de vaisseaux spatiaux tels que des satellites artificiels. Plus particulièrement, elle porte sur un assemblage de vaisseaux spatiaux.

Dans le cadre d'une politique agressive d'optimisation des coûts et des systèmes, il est nécessaire de modifier et optimiser les procédés habituels d'assemblage des satellites sous la coiffe des lanceurs spatiaux afin de maximiser l'espace et la masse disponible pour les vaisseaux spatiaux.

Habituellement, l'agencement de satellites au sein d'un lanceur se fait à l'aide de deux solutions :
La première option est l'utilisation d'un élément tubulaire central placé le long de l'axe de la coiffe du lanceur, appelé distributeur. Ce tube est lié mécaniquement aux satellites afin de les maintenir lors du lancement et du vol à l'aide d'interfaces mécaniques. L'ensemble formé du distributeur et des interfaces mécaniques fournit un assemblage rigide. Dans l'espace, après libération de cet assemblage depuis le lanceur, des charges pyrotechniques, des bobines électromécaniques, des alliages à mémoires de forme ou des actuateurs à paraffine, désolidarisent les satellites du distributeur structurel. La solution la plus simple consiste à solidariser une pluralité de satellites sur un seul étage autour d'un tube central.

La figure 1 montre un distributeur de l'art antérieur (tiré du document EP 3081496) pouvant être logé sous la coiffe d'un lanceur Falcon 9, ce distributeur permettant une utilisation plus efficiente de l'espace sous coiffe disponible. Cet assemblage fonctionne uniquement pour des satellites de petite taille, en les agençant en plusieurs couches autour d'un distributeur. Cet assemblage comprend 6 étages de 12 satellites à 2 couches, plus un étage à une seule couche, comprenant 4 satellites. Cet assemblage permet de lancer jusqu'à 76 satellites. L'utilisation d'un distributeur permet donc maintenir mécaniquement les satellites au lanceur et de contrôler la séquence de libérations des satellites. Cependant, l'installation d'un distributeur possède un coût financier et logistique important. De plus, le tube central occupe un espace important qui n'est pas converti en charge utile (satellites) et, en moyenne, le distributeur constitue 10 à 14% de la masse totale lancée.

Il est connu de l'art antérieur d'adapter la forme et le type de distributeur non tubulaire (voir par exemple brevet US 5411226 A) afin de minimiser l'espace occupé par le distributeur. Cependant, bien que l'espace occupé soit minimisé, la masse du distributeur restent conséquente et limite le nombre de satellites pouvant être lancés simultanément.

La deuxième option est l'empilement de satellites selon l'axe longitudinal du lanceur sous la coiffe. L'inconvénient de cette solution est que la masse des satellites empilés se répercute sur le ou les satellites du bas, ce qui oblige à adapter le design et la structure de ces satellites (en général en augmentant leur masse) afin qu'ils puissent supporter une telle contrainte mécanique. De plus, un tel arrangement complexifie grandement et augmente les risques de la séquence de séparation des satellites. Enfin, un tel assemblage est très souvent limité à un satellite par niveau.

L'invention vise à permettre une utilisation plus efficiente du volume disponible sous coiffe, de la masse totale lancée et donc à augmenter le nombre et/ou la masse de satellites pouvant être lancés simultanément.

### RESUME

Conformément à l'invention ce but est atteint en agençant les satellites sous la coiffe d'un lanceur sans utilisation d'un distributeur structurel.

Ainsi, un objet de l'invention est un assemblage comprenant :
- au moins un premier ensemble d'une pluralité de vaisseaux spatiaux destinés à être fixés à un lanceur dans une phase de lancement, les vaisseaux spatiaux étant agencés autour d'un axe central dans un même plan transversal perpendiculaire audit axe central, lesdits vaisseaux spatiaux présentant des arêtes selon un axe longitudinal et étant en outre agencés de manière à ce qu'un vaisseau spatial soit lié à un vaisseau spatial voisin par le biais d'une arête par au moins un dispositif de fixation situé sur ladite arrête, de manière à assurer le maintien mécanique desdits vaisseaux entre eux,
- un adaptateur satellites-lanceur auquel sont fixés lesdits vaisseaux spatiaux selon un plan transversal. Selon des modes de réalisation particuliers d'un tel assemblage :
   - Lesdits vaisseaux spatiaux sont fixés sur le lanceur via une pièce d'interface du lanceur, dite adapteur satellites-lanceur, adaptée selon le nombre de vaisseaux spatiaux à assembler.
   - Ledit adapteur satellites-lanceur est une pièce possédant une partie supérieure plane, côté vaisseaux spatiaux, et une partie inférieure circulaire ou conique, côté lanceur.
   - Ledit adapteur satellites-lanceur est une pièce cylindrique placée en dessous des vaisseaux spatiaux.
   - L'assemblage comprend un mat central commun à tous les vaisseaux spatiaux permettant de contrôler la séquence de libération des vaisseaux spatiaux.
   - Assemblage dans lequel il existe plusieurs ensembles de vaisseaux spatiaux agencés autour d'un axe central dans un même plan transversal perpendiculaire audit axe central, lesdits vaisseaux spatiaux présentant des arêtes selon un axe longitudinal et étant en outre agencés de manière à ce qu'un vaisseau spatial soit lié à un vaisseau spatial voisin par le biais d'une arête par au moins un dispositif de fixation situé sur ladite arrête, de manière à assurer le maintien mécanique desdits vaisseaux entre eux, formant des couches empilés selon l'axe longitudinal du lanceur, les couches étant liées entres elles dans un plan transversal dudit lanceur.

### BREVE DESCRIPTION DES DESSINS

D'autres caractéristiques, détails et avantages de l'invention ressortiront à la lecture de la description faite en référence aux dessins annexés donnés à titre d'exemple et qui représentent, respectivement :

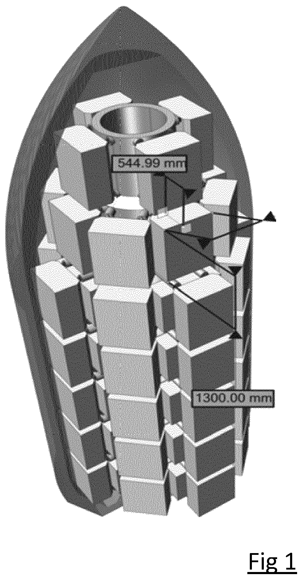

- La figure 1, décrite plus haut, un assemblage de vaisseaux spatiaux sous coiffe selon l'art antérieur ;
- La figure 2, une vue d'ensemble de l'assemblage de vaisseaux spatiaux selon l'invention ;
- La figure 3, une vue d'un vaisseau spatial ;
- La figure 4, une vue en détail d'un l'assemblage de vaisseaux spatiaux selon un mode de réalisation de l'invention ;
- La figure 5, une vue en coupe simplifiée d'un l'assemblage de vaisseaux spatiaux selon un mode de réalisation de l'invention ;
- La figure 6, un assemblage de vaisseaux spatiaux selon un mode de réalisation de l'invention ;

Dans la suite, on entendra par « direction longitudinale » (ou « axe longitudinal ») une direction (respectivement, un axe) parallèle à l'axe de la coiffe, et donc à la direction d'avancement du lanceur. On entend par « plan transversal » un plan perpendiculaire à l'axe de la coiffe (donc à l'axe longitudinal).

Le terme « vaisseau spatial » peut désigner un satellite artificiel ou tout autre engin destiné à évoluer dans l'espace, tel qu'une sonde interplanétaire. Dans la suite, les termes « satellite » et « vaisseau spatial » seront utilisés de manière interchangeable.

### DESCRIPTION DETAILLEE DE L'INVENTION

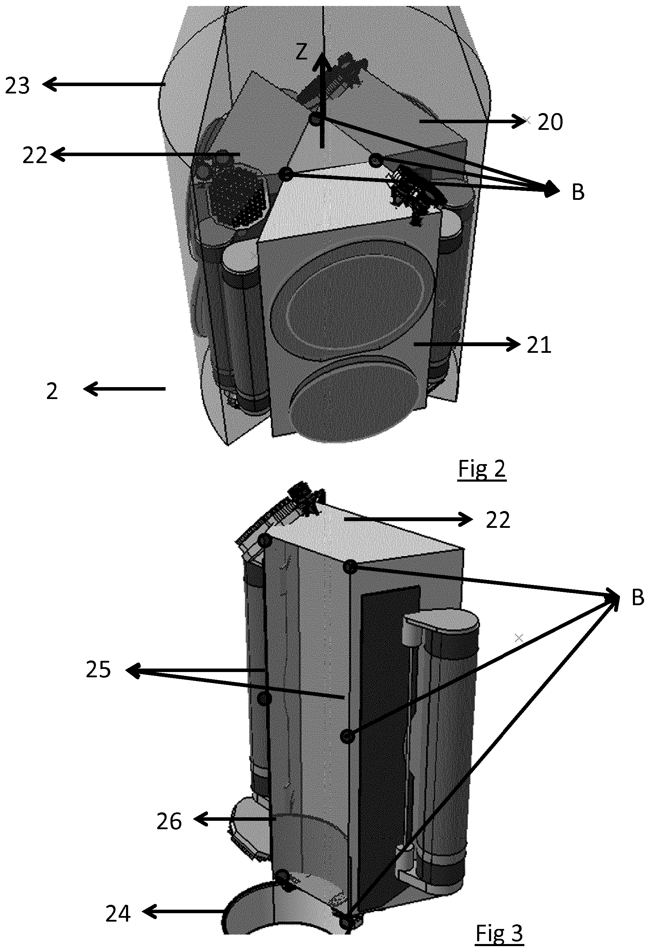

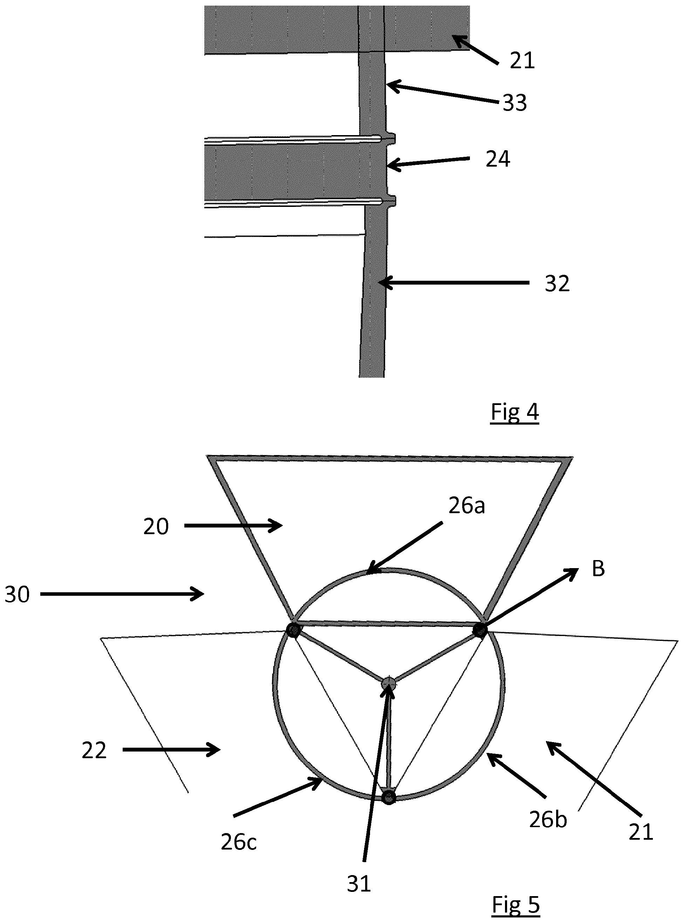

La figure 2 représente une vue en élévation d'un assemblage 2 de vaisseaux spatiaux 20, 21, 22 destinés à être fixé sous la coiffe d'un lanceur dans une phase de lancement, la coiffe étant représentée en transparence 23. Ici l'assemblage est composé de trois satellites à section trapézoïdale. Dans l'assemblage selon l'invention, les satellites sont agencés autour d'un axe central Z dans un même plan transversal de manière à former une couche. L'axe central est un axe parallèle à l'axe longitudinal du lanceur spatial. On appelle ici plan transversal, tout plan perpendiculaire à l'axe central Z. Les satellites sont liés mécaniquement entre eux uniquement par le biais de leurs arêtes, suivant l'axe longitudinal du lanceur spatial. Plus précisément, les satellites ou vaisseaux spatiaux sont agencés de manière à ce qu'un vaisseau spatial soit lié à un vaisseau spatial voisin de l'ensemble par le biais d'une arête par au moins un dispositif de fixation B (ou point de fixation) situé sur ladite arrête, de manière à assurer le maintien mécanique desdits vaisseaux entre eux. La figure 2 illustre trois de ces points de fixation B, situés au sommet des arêtes des satellites voisins. De plus, les satellites sont liés mécaniquement au lanceur par le biais d'une pièce d'interface dite adapteur satellites-lanceur (24, visible dans la figure 3) similaire à celle schématisée dans la figure 4 comportant des points (ou pieds) de fixation liants les satellites à cette pièce. L'interface lanceur étant typiquement circulaire, l'adapteur satellites-lanceur comporte généralement une partie circulaire afin d'être fixé au lanceur. Dans l'assemblage de la figure 2 les fixations satellite/satellite et satellite/lanceur sont réalisées par des boulons pyrotechniques. Ce type de fixation possède l'avantage de faciliter le contrôle séquence de libération des vaisseaux spatiaux groupés/séparés. Ces dispositifs de fixations permettent donc en outre la libération des satellites entre eux lors de la séquence de libération. Alternativement, le ou les dispositifs de fixation B sont des bobines électromécaniques, des alliages à mémoires de forme, des actuateurs à paraffine ou d'autres mécanismes de liaisons détachables activables à distance.

L'assemblage selon l'invention n'utilise pas de distributeur pour maintenir les vaisseaux spatiaux au lanceur lors du lancement. Le rôle de maintien mécanique suivant l'axe longitudinal du lanceur qui était rempli habituellement par un distributeur structurel est ici réalisé par les liaisons entre les arêtes des satellites suivant le même axe, ici par des boulons pyrotechniques. Par distributeur structurel, on entend ici un élément de structure présentant une rigidité mécanique très importante et permettant de résister aux forces entre le lanceur et chacun des satellites et entre les satellites eux-mêmes. Cette solution permet donc un gain considérable de volume de stockage et un gain de masse utile lançable. Il est alors possible de modifier la structure des satellites pour profiter de cette espace et de cette masse disponible afin d'embarquer plus de charge utile qui représente la valeur des satellites. De plus, ne pas installer de distributeur permet une baisse des coûts et simplifie le procédé d'aménagement. La masse utile économisée grâce à cet assemblage est estimée de 5 à 7% de la masse utile totale lancée (soit environ 50% de la masse d'un distributeur classique). L'arrangement représenté dans la figure 2 est appelé « trapèze » car il est composé de satellites à section trapézoïdale. Dans un autre mode de réalisation les satellites sont à section rectangulaire. Cependant, l'utilisation de satellites à section trapézoïdale permet une plus grande utilisation de l'espace rendu disponible par l'absence de distributeur qu'avec des satellites à section rectangulaire. Elle sera donc préférentiellement utilisée.

Le comportement dynamique de l'assemblage doit respecter les exigences des autorités de lancement. Plus particulièrement les fréquences des premiers modes d'oscillation dans une direction verticale et longitudinale doivent être supérieures à des valeurs limites qui dépendent du lanceur et qui sont de l'ordre de quelques Hz ou dizaines de Hz. Des simulations numériques ont permis de montrer que, dans le mode de réalisation de la figure 2, la première fréquence transversale et longitudinale ont des valeurs conformes aux spécifications.

L'assemblage rigide formé par les trois satellites à section trapézoïdale et l'adapteur satellites-lanceur est placée au centre de la coiffe lanceur. La figure 3 présente une vue isolée en élévation du satellite à section trapézoïdale 22 seul placé sur l'adapteur satellites-lanceur 24. Les arêtes 25 du satellite 22 sont celles qui, solidarisées avec les autres des satellites voisin 20 et 21 (représentés dans la figure 2) par le biais de dispositifs de fixation B permettant le maintien des satellites entre eux et permettant la libération de ces satellites. La figure 3 illustre les dispositifs de fixation B qui sont placés sur les arêtes 25 et répartis le long de ces dernières. Dans l'exemple de la figure 3, donné à titre non limitatif, la liaison entre deux satellites voisins se fait par deux dispositifs de fixation B placés le long des arêtes 25 alors que la liaison du satellite à l'adapteur lanceur se fait par deux dispositifs de fixation B.

Dans le mode de réalisation des figures 2 et 3, les satellites possèdent un renfort cylindrique 26 placé à la base de la structure des satellites, dans le prolongement de la fixation avec l'adapteur satellites-lanceur 24 permettant d'apporter une rigidité et un maintien supplémentaire des satellites à l'adapteur satellites-lanceur. Dans un autre mode de réalisation ce renfort cylindrique n'est pas installé dans la structure des satellites.

Dans un autre exemple, les satellites sont solidarisés entre eux de la même manière que l'assemblage illustré dans la figure 2 mais sont liés directement (sans adapteur satellites-lanceur 24) au lanceur par le biais d'une sangle par exemple fournissant de fait un maintien supplémentaire entre eux. Dans ce cas, les satellites sont fixés sur le pourtour circulaire de l'interface lanceur. Le nombre de satellites qui composent l'assemblage peut être différent de trois, tant dans le mode de réalisation avec un adapteur satellites-lanceur que dans celui avec fixation directe sur le lanceur. La figure 4 est une vue en plan de l'assemblage selon l'invention d'un satellite et de la pièce d'interface adapteur satellites-lanceur 24. Cette pièce lie le lanceur 32 aux trois satellites (ici seulement un satellite 21 est représenté) par le biais d'un pied de fixation 33. L'adaptateur satellites-lanceur est une pièce métallique cylindrique rigide placée directement en dessous des satellites et entre les satellites et le lanceur. Dans un autre mode de réalisation l'adapteur satellites-lanceur est une pièce dont la partie supérieure (côté satellites) est une simple plaque rigide plane permettant de faire le lien avec les satellites et dont la partie inférieure (côté lanceur) est circulaire ou conique pour faire le lien au lanceur. Dans le mode de réalisation de la figure 4, l'adapteur satellites-lanceur est une pièce commune aux trois satellites. Dans un autre mode de réalisation, cette pièce d'interface est adaptée au nombre et à la structure des vaisseaux spatiaux que l'on souhaite assembler.

La figure 5 représente une vue schématisée en coupe de l'assemblage de vaisseaux spatiaux selon le même mode de réalisation que celui de la figure 4. Pour rappel, la structure des satellites est en trapèze afin d'optimiser l'espace libéré par l'absence de distributeur. Les trois satellites 20, 21, 22 sont liés par leurs arêtes par le biais de dispositifs de fixation B et les renforts 26a, 26b, 26c dans chaque satellite sont des tiers de cylindres permettant d'apporter une rigidité et un maintien supplémentaire des satellites à l'adapteur satellites-lanceur. Les dispositifs de fixation B sont placés au sommet des arêtes des satellites voisins d'une même couche et permettant de solidariser les satellites entre eux. De plus, un mat central 31 qui, à la différence d'un distributeur conventionnel n'assure aucune fonction structurelle et peut donc être beaucoup plus léger, est installé au centre de l'assemblage et est relié à tous les satellites. Ce mat est relié à tous les points de fixation des satellites entre eux et ceux des satellites à l'adapteur satellites-lanceur. Ce mat est une simple interface non mécanique, qui ne maintien pas les satellites entre eux ou au lanceur mais qui comporte le dispositif de libération des vaisseaux spatiaux. Les extrémités de ce mat sont des charges pyrotechniques permettent, au moment voulu, de désolidariser les satellites entre eux et les satellites du lanceur. Dans le mode de réalisation de cette figure, les points de fixation des satellites entre eux et ceux des satellites à l'adapteur satellites-lanceur sont des boulons pyrotechniques et le mat permet de contrôler l'explosion de ces boulons. Ce mat non structurel permet donc de contrôler la séquence de libération des satellites. Il est possible de libérer plusieurs satellites de manière groupée, ou de les libérer séparément un par un.

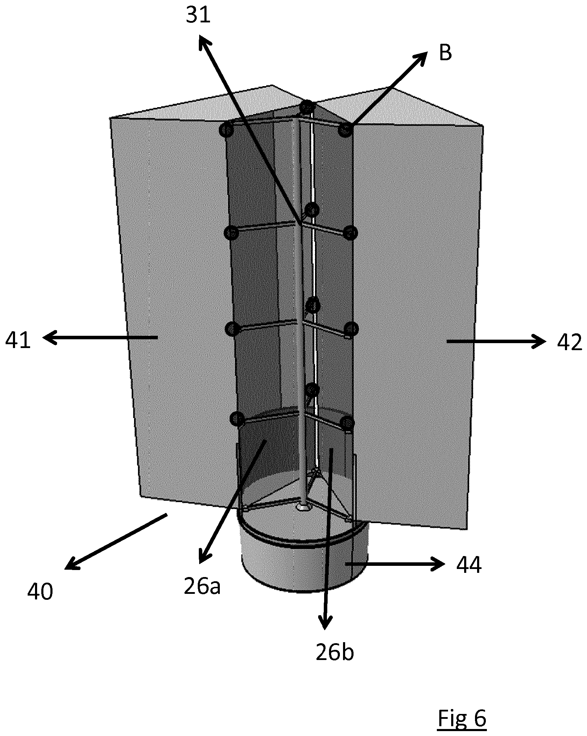

La figure 6 représente un assemblage 40 de trois satellites « trapèzes » 41, 42, 43 -un satellite 43 n'est pas représenté pour des raisons de visibilité- liés au lanceur par un adapteur satellites-lanceur cylindrique 44 avec un mat central non structurel 31 servant d'interface commune aux trois satellites comportant un dispositif de libération des vaisseaux spatiaux. Dans l'exemple de la figure 6, la liaison entre les satellites voisins se fait par 4 points de fixations par des boulons pyrotechniques et la liaison satellites / adapteur satellites-lanceur se fait à l'aide de deux points de fixations (ici encore des boulons pyrotechniques). De plus, comme dans le mode de réalisation de la figure 3 la structure des satellites comporte deux tiers de cylindre 26a, 26b qui servent à favoriser la transition des efforts satellites / adapteur satellites-lanceur. Le nombre de liaisons satellites/satellites et satellites / adapteur satellites-lanceur peut être différent de celui de l'exemple de la figure 6.

Dans un autre exemple, le dispositif de libération n'est pas réalisé par des boulons pyrotechniques mais par des bobines électromécaniques, des alliages à mémoires de forme, des actuateurs à paraffine ou autres mécanismes de liaisons détachables activables à distance.

Dans un autre exemple, l'interface non mécanique commune à tous les vaisseaux spatiaux et qui comporte un dispositif de libération des vaisseaux n'est pas un mat mais est réalisée par des câbles reliés entre eux et fixés au niveau de l'adapteur satellites-lanceur et reliant tous les points de fixation des satellites entre eux et des satellites à l'adapteur satellites-lanceur. L'avantage d'un mat est qu'il est moins susceptible de se déplacer lors du lancement.

Dans un autre mode de réalisation, on réalise des empilements suivant l'axe longitudinal lanceur de plusieurs couches d'ensembles de multiples vaisseaux spatiaux liés entre eux uniquement suivant l'axe longitudinal du lanceur, sans utilisation d'un distributeur structurel et liés à l'interface du lanceur selon un plan transversal du lanceur. Cet assemblage possède l'avantage de pouvoir réaliser N empilements de n satellites tout en contrôlant, pour chaque assemblage, la séquence de lancement des n satellites. Dans ce mode de réalisation des points de fixations (des boulons pyrotechniques par exemple) ou une fixation continue en arc de cercle par satellite, dans le plan transverse seront utilisés entre chaque empilement afin de pouvoir séparer les empilements un par un. Il est évident que, dans ce cas, la structure et le design des satellites des empilements du bas devra être adaptée pour supporter la contrainte de la masse des satellites empilés au-dessus.

La séquence d'assemblage d'une pluralité de vaisseaux spatiaux 20, 21, 22 sous la coiffe d'un lanceur 23 comprend :
▪ Monter l'adapteur satellites-lanceur 24 sur le lanceur et sous la coiffe ;
▪ Installer le 1ère ensemble de satellites 2, un par un, de cette manière;
   - Fixer un satellite sur l'adapteur satellites-lanceur ;
   - Puis un autre et le lier au satellite déjà fixé selon l'axe longitudinal lanceur ;
   - Puis un autre, etc... jusqu'à avoir fixé tous les satellites et les avoir liés entre eux selon l'axe longitudinal lanceur de manière à former un assemblage solidarisé;
▪ Installer l'interface non mécanique 31 commune à tous les vaisseaux spatiaux comportant un dispositif de libération des vaisseaux.

La séquence d'assemblage est identique à celle précédemment illustrée mais l'installation de l'interface non mécanique est effectuée après avoir fixé un premier satellite sur l'adapteur satellites-lanceur.

L'installation de l'interface non mécanique peut se faire avant l'agencement d'un premier ensemble de satellites sous la coiffe lanceur (et après les avoir liés ensemble selon l'axe longitudinal lanceur).

## Revendications

1. Assemblage de vaisseaux spatiaux comprenant :
- au moins un premier ensemble (2) d'une pluralité de vaisseaux spatiaux (20, 21, 22) destinés à être fixés à un lanceur (23) dans une phase de lancement, les vaisseaux spatiaux étant agencés autour d'un axe central (Z) dans un même plan transversal perpendiculaire audit axe central, lesdits vaisseaux spatiaux présentant des arêtes selon un axe longitudinal, et
- un adaptateur satellites-lanceur (24) auquel sont fixés lesdits vaisseaux spatiaux selon un plan transversal, **caractérisé en ce que** les vaisseaux spatiaux sont en outre agencés de manière à ce qu'un vaisseau spatial soit lié à un vaisseau spatial voisin de l'ensemble par le biais d'une arête par au moins un dispositif de fixation (B) situé sur ladite arrête, de manière à assurer le maintien mécanique desdits vaisseaux entre eux.

2. Assemblage de vaisseaux spatiaux selon la revendication précédente, dans lequel l'adapteur satellites-lanceur est une pièce possédant une partie supérieure plane, côté vaisseaux spatiaux, et une partie inférieure circulaire ou conique, côté lanceur.

3. Assemblage de vaisseaux spatiaux selon la revendication précédente, dans lequel l'adapteur satellites-lanceur est une pièce cylindrique placée en dessous des vaisseaux spatiaux.

4. Assemblage de vaisseaux spatiaux selon l'une quelconque des revendications précédentes, comprenant un mat central (31) commun à tous les vaisseaux spatiaux permettant de contrôler la séquence de libération des vaisseaux spatiaux.

5. Assemblage de vaisseaux spatiaux selon l'une quelconque des revendications précédentes, dans lequel il existe plusieurs ensembles de vaisseaux spatiaux , formant des couches empilées selon l'axe longitudinal du lanceur, les couches étant liées entres elles dans un plan transversal dudit lanceur.

## Patentansprüche

1. Anordnung von Raumfahrzeugen, Folgendes umfassend:
- mindestens eine erste Gruppe (2) einer Vielzahl von Raumfahrzeugen (20, 21, 22), dazu bestimmt, an einer Trägerrakete (23) in einer Abschussphase befestigt zu werden, wobei die Raumfahrzeuge um eine mittlere Achse (Z) in einer gleichen Ebene in Querrichtung, rechtwinklig zu der mittleren Achse, angeordnet sind, wobei die Raumfahrzeuge Kanten entlang einer Längsachse aufweisen, und
- einen Satelliten-Trägerraketen-Adapter (24), an welchem die Raumfahrzeuge entlang einer Ebene in Querrichtung befestigt sind, **dadurch gekennzeichnet, dass** die Raumfahrzeuge ferner so angeordnet sind, dass ein Raumfahrzeug an einem benachbarten Raumfahrzeug der Gruppe über eine Kante mit mindestens einer Befestigungsvorrichtung (B) verbunden ist, welche sich an der Kante befindet, um den mechanischen Halt der Raumfahrzeuge untereinander sicherzustellen.

2. Anordnung von Raumfahrzeugen nach dem vorhergehenden Anspruch, wobei der Satelliten-Trägerraketen-Adapter ein Teil ist, welches einen oberen ebenen Teil auf der Raumfahrzeugseite, und einen unteren kreisförmigen oder konischen Teil auf der Trägerraketenseite besitzt.

3. Anordnung von Raumfahrzeugen nach dem vorhergehenden Anspruch, wobei der Satelliten-Trägerraketen-Adapter ein zylindrisches Teil ist, welches unterhalb der Raumfahrzeuge platziert ist.

4. Anordnung von Raumfahrzeugen nach einem der vorhergehenden Ansprüche, umfassend einen mittleren Mast (31), welcher allen Raumfahrzeugen gemeinsam ist, welcher es ermöglicht, die Freisetzungssequenz der Raumfahrzeuge zu steuern.

5. Anordnung von Raumfahrzeugen nach einem der vorhergehenden Ansprüche, wobei es mehrere Gruppen von Raumfahrzeugen gibt, welche entlang der Längsachse der Trägerrakete gestapelte Schichten bilden, wobei die Schichten miteinander in einer Ebene in Querrichtung der Trägerrakete verbunden sind.

## Claims

1. A spacecraft assembly comprising:
- at least one first collection (2) of a plurality of spacecraft (20, 21, 22) intended to be fastened to a launcher (23) during a launch phase, the spacecraft being arranged about a central axis (Z) in a given transverse plane perpendicular to said central axis, said spacecraft having edges along a longitudinal axis, and
- a satellites-launcher adaptor (24) to which said spacecraft are fastened in a transverse plane, **characterised in that** the spacecraft are further arranged such that a spacecraft is linked to a neighbouring spacecraft of the collection by one edge by means of at least one fastener (B) positioned on said edge, so as to ensure the mechanical retention of said spacecraft with one another.

2. The spacecraft assembly according to the preceding claim, wherein the satellites-launcher adaptor is a part having a planar upper portion, on the spacecraft side, and a circular or conical lower portion, on the launcher side.

3. The spacecraft assembly according to the preceding claim, wherein the satellites-launcher adaptor is a cylindrical part located below the spacecraft.

4. The spacecraft assembly according to any one of the preceding claims, comprising a central mast (31) that is shared by all the spacecraft and makes it possible to control the release sequence of the spacecraft.

5. The spacecraft assembly according to any one of the preceding claims, wherein there are multiple collections of spacecraft, forming layers stacked along the longitudinal axis of the launcher, the layers being linked to one another in a transverse plane of said launcher.
